(19) Europäisches Patentamt
European Patent Office
Office européen des brevets

(11) **EP 1 925 969 A2**

(12) **EUROPEAN PATENT APPLICATION**

(43) Date of publication:
**28.05.2008 Bulletin 2008/22**

(51) Int Cl.:
***G02F 1/1335*** (2006.01)  ***G02F 1/1362*** (2006.01)
***G02F 1/1333*** (2006.01)  ***G02F 1/139*** (2006.01)

(21) Application number: **07022440.7**

(22) Date of filing: **20.11.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **27.11.2006 KR 20060117623**

(71) Applicant: **Samsung Electronics Co., Ltd.
Suwon-si, Gyeonggi-do 442-742 (KR)**

(72) Inventors:
• **Son, Jong-Ho
Gangnam-gu
Seoul (KR)**
• **Park, Joon-Hyung
Gangseo-gu
Seoul (KR)**

(74) Representative: **Dr. Weitzel & Partner
Friedenstrasse 10
89522 Heidenheim (DE)**

(54) **Display device**

(57)    A pair of polarizers having different polarization efficiencies is employed for a display device. With such a pair of polarizers, the brightness may increase without deteriorating the contrast.

## FIG.1

EP 1 925 969 A2

**Description**

CROSS-REFERENCE TO RELATED APPLICATIONS

This application claims priority to and the benefit of Korean Patent Application No. 10-2006-0117623, filed before the Korean Intellectual Property Office on November 27, 2006, which is incorporated herein by reference in its entirety.

BACKGROUND OF THE INVENTION

(a) Technical Field

The present invention relates to display device technology and, more particularly, to the application of a pair of polarizers to a display device.

(b) Discussion of the Related Art

In general, a display device displaying an image by controlling the polarization state of the incident light includes a pair of polarizers and a display panel. The first polarizer provides a first polarized light to the display panel, and the display panel changes the polarization state of the first polarized light by utilizing, for example, the eletro-optical characteristics of liquid crystal molecules therein. The second polarizer transmits only a parallel component of the light to its transmission axis. Practically, however, some liquid crystal molecules behave differently from the other liquid crystal molecules in the same pixel due to unnecessary fringe field effect at the boundaries of electrodes. This often causes the so-called textures, black portions of the pixel in its bright state, thereby deteriorating display quality.

SUMMARY

Devices disclosed herein are applicable to display devices. For example, in accordance with an embodiment of the present invention, a display device includes two polarizers, a pair of panels disposed therebetween and a backlight. The two polarizers are chosen to have different degrees of polarization so that the polarizer of lower polarization efficiency may transmit a light whose polarization direction is slightly deviated from the transmission axis of the polarizer, thereby enhancing the brightness without deteriorating the contrast ratio.
The scope of the invention is defined by the claims. A more complete description of the embodiments of the present invention and their advantages are provided in the following text.

BRIEF DESCRIPTION OF THE DRAWINGS

Fig. 1 is an exploded diagram of an exemplary display device in accordance with an embodiment of the present invention.
Fig. 2 is a layout view of an exemplary first panel in accordance with an embodiment of the present invention.
Fig. 3 is a layout view of an exemplary second panel in accordance with an embodiment of the present invention.
Fig. 4 is a layout view of an exemplary display panel assembly including the first panel of Fig. 2 and the second panel of Fig. 3.
Fig. 5 is a cross-sectional view taken along the line V-V of Fig. 4.
Fig. 6 is a cross-sectional view taken along the line VI-VI of Fig. 4.
Fig. 7 is a schematic diagram illustrating three pairs of polarizers.
Fig. 8a is a picture of a conventional liquid crystal display device, illustrating that unnecessary textures appear.
Fig. 8b is a picture of a liquid crystal display device in accordance with an embodiment of the present invention, illustrating that unnecessary textures decrease.
Fig. 9 is a schematic diagram illustrating polarization change of a light traveling through a liquid crystal display device in accordance with an embodiment of the present invention.

DETAILED DESCRIPTION OF EXEMPLARY EMBODIMENTS

Like reference numerals are used to identify like elements in the figures. Furthermore, the elements or layers may not be drawn to scale and may be magnified for clarity (e.g., when illustrating semiconductor layers). Also, the words "above" or "on" may be used, for example, to refer to a position of a layer, an area, or a plate relative to another referenced element, but such use is not intended to exclude an intermediate element disposed between the referenced element and the layer, area, or plate. However, the terms "directly above" or "directly on" are used to indicate that no intermediate element exists between the referenced element and the layer, area, or plate.

**Display Device**

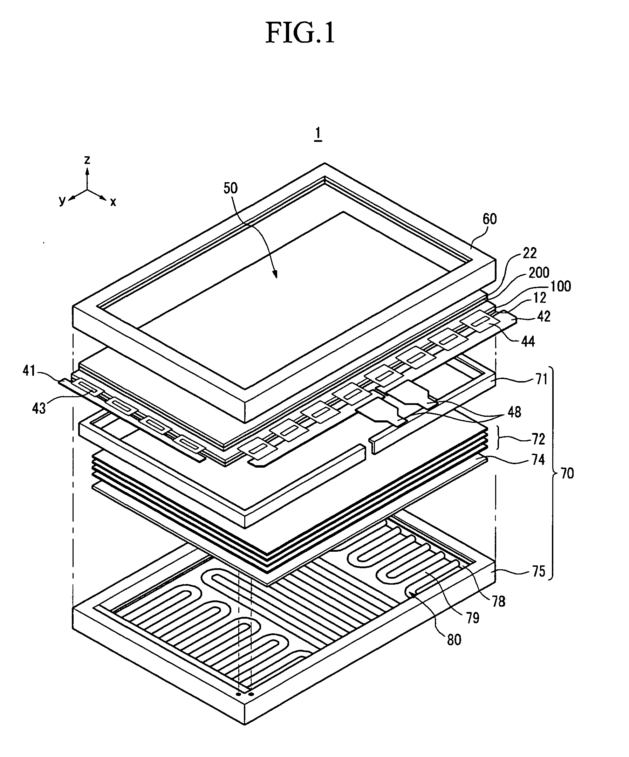

Fig. 1 is an exploded diagram of an exemplary display device 1 in accordance with an embodiment of the present invention. As shown in Fig. 1, the display device 1 comprises a display panel assembly 50, a backlight assembly 70 and a chassis 60. The backlight assembly 70 provides the display panel assembly 50 with planarized light. The display panel assembly 50 displays an image by controlling the light transmittance according to the image information.
The chassis 60 secures the display panel assembly 50 to the back light assembly 70.

**Backlight Assembly**

Referring to Fig. 1, the backlight assembly 70 includes a container 75, a reflector 79, a backlight 80, a backlight holder 78, one or more optical sheets 72, a diffuser 74, and a frame 71.
The reflector 79 is disposed on the bottom of the container 75 and reflects a light from the backlight 80 toward the display panel assembly 50.
The backlight 80 is a light source for the display device 1. It may comprise a cold cathode fluorescent lamp (CCFL) or a hot cathode fluorescent lamp (HCFL) or a light-emitting diode (LED). The lamps shown in Fig. 1 are U-shaped lamps arranged on the surface of the reflector 79. However, they may be linear lamps and they may be arranged on an edge of a light guide panel on the reflector 79.
The optical sheets 72 (e.g. one or two prism sheets, a reflective polarizer for recycling light, etc.) and the diffuser 74 are intended to enhance the brightness and/or the light uniformity over the display panel assembly 50. The stacking order of each optical sheet 72 and the diffuser 74 may vary according to the overall optical characteristics.
The frame 71 fixes the optical sheets 72 and the diffuser 74 to the container 75.

**Display Panel Assembly**

Referring to Fig. 1, the display panel assembly 50 includes a first polarizer 12, a first panel 100, a liquid crystal layer (not shown), a second panel 200 and a second polarizer 22. The display panel assembly 50 further includes a gate driver 43 and a data driver 44, respectively providing a gate signal and a data signal to the first panel 100.
The gate driver 43 and the data driver 44 are attached on the sides of the first panel 100 in the form of a chip as shown in Fig. 1. However, the gate driver 43 and/or the data driver 44 may be formed directly on the first panel 100 in the form of circuitry. The display panel assembly 50 may further include a birefringent layer (not shown) between the first polarizer 12 and the first panel 100, or the second polarizer 22 and the second panel 200, to compensate the birefringence of the liquid crystal layer.
The present invention will be described hereinafter with an embodiment where the first panel 100 includes a thin film transistor and a pixel electrode and the second panel 200 includes a color filter and a reference electrode, but the present invention may also be applied to display devices having different structures.

**First Panel**

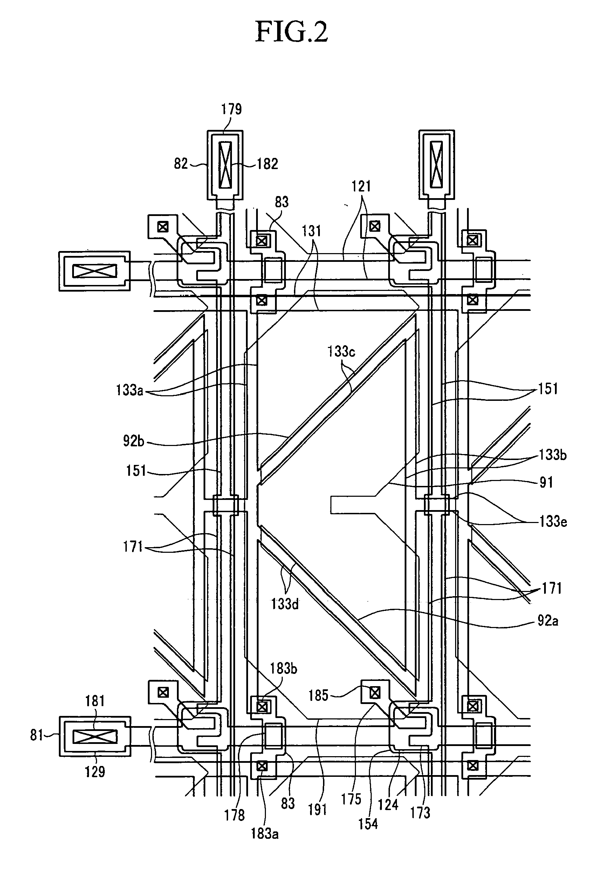

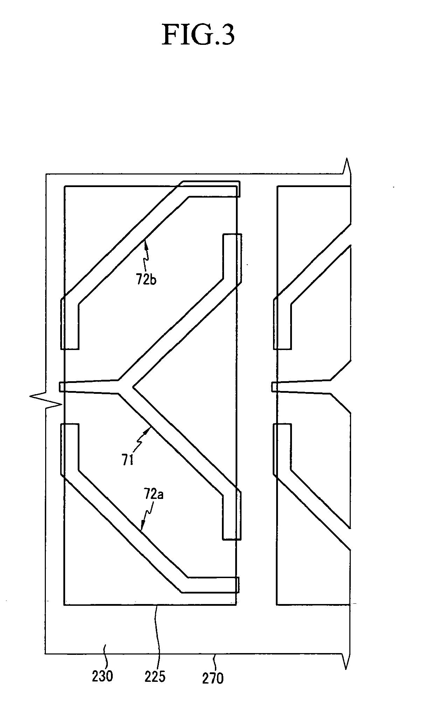

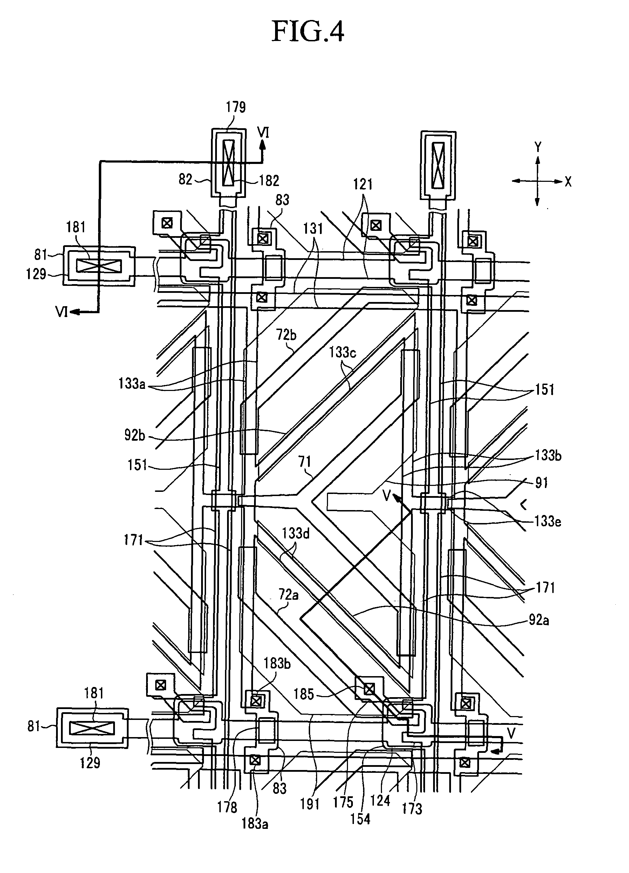

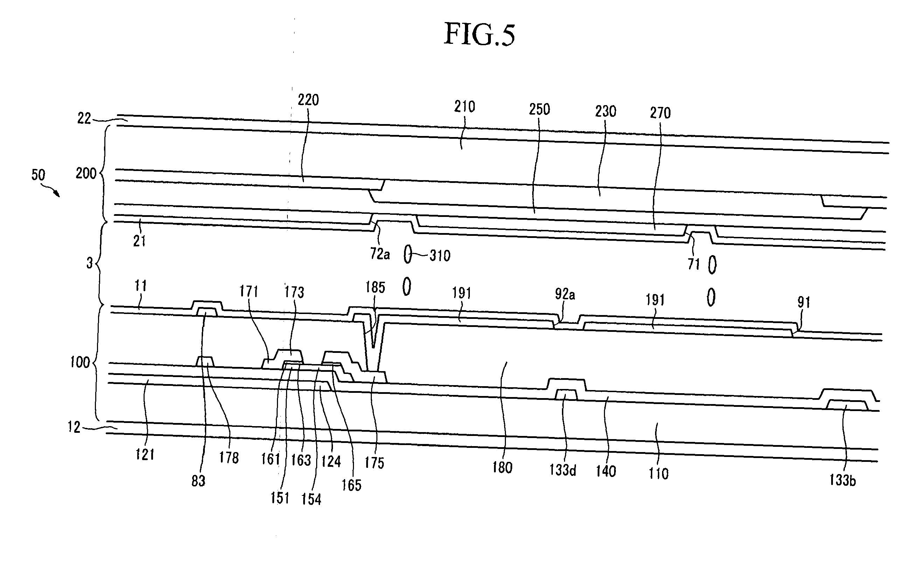

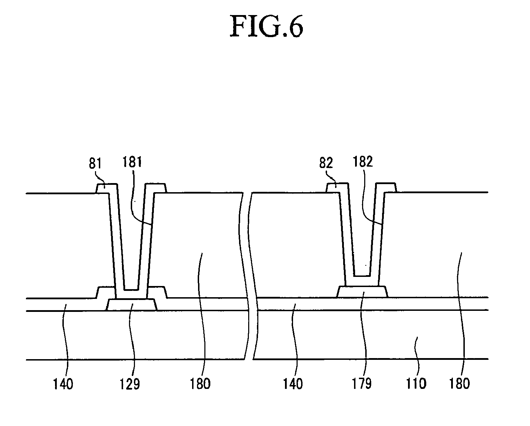

Figs. 2 and 3 are layout views of an exemplary first panel and an exemplary second panel, respectively, in accordance with an embodiment of the present invention. Fig. 4 is a layout view of the display panel assembly including the first panel of Fig. 2 and the second panel of Fig. 3. Figs. 5 and 6 are cross-sectional views, respectively, taken along the lines V-V and VI-VI of Fig. 4.
Referring to Figs. 2 and 4 to 6, the first panel 100 includes a first substrate 110, a gate line 121, a storage line 131, a gate insulating layer 140, a semiconductor active layer 154, an ohmic contact layer 163 and 165, a data line 171, a passivation layer 180, a pixel electrode 191, and an first alignment layer 11.
The first substrate 110 supports structures to be formed on the first substrate 110. The first substrate 110 is transparent and insulative, and may be made of glass, plastic, etc.
The gate line 121 for transmitting a gate signal is formed on the first substrate 110 and includes a gate electrode 124 and a gate pad 129 for an electrical connection to the gate driver 43.
The storage line 131 includes a set of branches 133a to 133d and a connection 133e. With the pixel electrode 191, the storage line 131 and the branches 133a and 133b form a storage capacitor $C_{ST}$ to increase the voltage holding ratio (VHR) of a liquid crystal capacitor $C_{LC}$ to be described later.

The gate line 121 and the storage line 131 may be made of a low resistance material such as aluminum, silver, copper, molybdenum, chromium, titanium, tantalum or their alloys. The gate line 121 and/or the storage line 131 may have a multilayer structure. The gate line 121 and/or the storage line 131 may have a tapered structure, preferably, with a taper angle from 30 degrees to 80 degrees.

The gate insulating layer 140 is formed on the gate line 121 and the storage line 131. The gate insulating layer 140 may be made of silicon nitride (SiNx) or silicon oxide (SiOx). The gate insulating layer 140 may have a multilayer structure.

The semiconductor active layer 154 is formed on the gate insulating layer 140 over the gate electrode 124. A semiconductor strip 151 is formed on the gate insulating layer 140 under the data line 171 for the simplicity of the manufacturing process, as shown in Fig. 2, but the semiconductor strip 151 may be omitted. The semiconductor active layer 154 and the semiconductor strip 151 may be made of hydrogenated amorphous silicon (a-Si:H) or poly-silicon.

The ohmic contact layer 163 and 165 is formed on the semiconductor active layer 154. An ohmic contact strip 161 is formed on the semiconductor strip 151 for the simplicity of the manufacturing process, as shown in Fig. 2, but the ohmic contact strip 161 may be omitted especially when the semiconductor strip 151 is omitted. The ohmic contact layer 163 and 165 and the ohmic contact strip 161 are made of hydrogenated amorphous silicon doped with n-type dopant (n+ a-Si:H) or silicide.

The semiconductor strip 151 and/or the ohmic contact strip 161 may have a tapered structure, preferably, with a taper angle from 30 degrees to 80 degrees.

The data line 171, a drain electrode 175 and a metal piece 178 are formed on the ohmic contact strip 161, the ohmic contact layer 165 and the gate insulating layer 140, respectively. The data line 171 for transmitting a data signal intersects the gate line 121, the storage line 131 and the connection 133e. The data line 171 includes a source electrode 173 on the ohmic contact layer 163, and a data pad 179 for an electrical connection to a data driver 44.

The drain electrode 175 is separated from the data line 171. One end of the drain electrode 175 is enclosed with the source electrode 173, and the other end is for the electrical connection to the pixel electrode 171.

The gate electrode 124, the source electrode 173 and the drain electrode 175 form a thin film transistor (TFT) having a channel between the source electrode 173 and the drain electrode 175.

The metal piece 178 is formed over the gate line 121 to enhance step coverage of the overlying structure, but may be omitted.

The data line 171, the drain electrode 175 and the isolated metal piece 178 are also made of a low resistance material, and may have a multilayer structure and/or a tapered structure, preferably, with a taper angle from 30 degrees to 80 degrees.

The passivation layer 180 is formed on the channel, the data line 171, the drain electrode 175 and the metal piece 178. The passivation layer 180 is made of inorganic or organic insulating material, and may have a flat surface. The inorganic insulating material may be silicon nitride (SiNx) or silicon oxide (SiOx). The organic insulating material may be photosensitive, preferably with a dielectric constant less than 4.0. The passivation layer 180 may have a multilayer structure, for example, an organic upper layer on an inorganic lower layer, to achieve better insulating and passivating characteristics.

The pixel electrode 181, a bridge 83 and contact assistants 81 and 82 made of indium tin oxide (ITO) or indium zinc oxide (IZO) are formed on the passivation layer 180.

The pixel electrode 191 is electrically connected to the drain electrode 175 via a contact hole 185. When a data voltage is applied to the pixel electrode 191 and a reference voltage to the reference electrode 270, an electric field is generated in the liquid crystal layer 3 between the pixel electrode 191 and the reference electrode 270. The liquid crystal molecules in the liquid crystal layer 3 changes their orientations and accordingly changes the polarization state of the light passing the liquid crystal layer 3. The pixel electrode 191 and the reference electrode 270 with the liquid crystal layer 3 disposed therebetween form a liquid crystal capacitor $C_{LC}$ for keeping the voltage difference between the pixel electrode 270 and the reference electrode 270 when the TFT goes off.

The pixel electrode 191 has a chamfered rectangular shape having a plurality of openings 91, 92a and 92b. The chamfers of the pixel electrode 191 at four corners make an angle of 45 degrees with the gate line 121. The openings 91, 92a and 92b divide the pixel electrode 191 into a plurality of partitions. The central opening 91 divides the pixel electrode 191 into the upper portion and the lower portion. The lower and upper openings 92a and 92b make an angle of 45 degrees with the gate line 121 and overlap with the branches 133d and 133c, respectively. The number of openings and/or the number of partitions of the pixel electrode 191 may vary according to the dimension of the pixel electrode 191, the aspect ratio of the pixel electrode 191, the electro-optical characteristics of the liquid crystal layer 3, and/or other design factors.

The bridge 83 crosses the gate line 121 over the metal piece 178, and connects the storage line 131 with the branch 133a via bridge holes 183a and 183b. The storage line 131, the branches 133a and 133b may be utilized in repairing defects in the data line 171 or the thin film transistor with the help of the bridge 83.

The first alignment layer 11 is formed on the pixel electrode 191. The first alignment layer 11 is for the initial alignment of the liquid crystal molecules near the pixel electrode 191. The first alignment layer 11 may align the liquid crystal molecules near the pixel electrode 191 vertically with respect to the pixel electrode 191.

**Second Panel**

Referring to Figs. 3 to 6, the second panel 200 includes a second substrate 210, a light blocking layer 220, a color filter 230, an overcoat 250, a reference electrode 270, and a second alignment layer 21.

The second substrate 210 supports structures to be formed on the second substrate 210. The second substrate 210 is transparent and insulative, and may be made of glass, plastic, etc.

The light blocking layer 220 is formed on the second substrate 210 and blocks a light leakage between two adjacent pixel electrodes 191. The light blocking layer 220 has an opening opposite the pixel electrode 191, whose shape is similar to the pixel electrode 191. The light blocking layer 220 may be made of a metallic material such as chromium, chromium oxide, etc., or may comprise a black pigment such as carbon black. The light blocking layer 220 may have a multilayer structure such as chromium and chromium oxide to reduce the reflectance.

The color filter 230 is formed on the substrate 210 and within the opening of the light blocking layer 220. The color filter 230 may represent one of three primary colors such as red, green and blue.

The overcoat 250 is formed on the light blocking layer 220 and the color filter 230, and is made of an insulating material. The overcoat 250 protects the color filter 230 and provides a flat surface. The overcoat 250 may be omitted.

The reference electrode 270 is formed on the overcoat 250. The reference electrode 270 is made of ITO or IZO, but may be made of an opaque metal when formed on the same side as the pixel electrode 171. The reference electrode 270 has a plurality of openings 71, 72a and 72b. Each of the lower opening 72a and the upper opening 72b include a portion making an angle of 45 degrees with the gate line 121 and facing one of the partitions of the pixel electrode 191.

The central opening 71 includes a horizontal portion parallel to the gate line 121, a pair of vertical portions parallel to the data line 171 and a pair of oblique portions parallel to the lower opening 72a and upper opening 72b respectively. The number of openings of the reference electrode 270 may vary according to various design factors. The light blocking layer 220 may overlap the plurality of openings 71, 72a and 72b, thereby blocking the light leakage near the openings 71, 72a and 72b.

When a reference voltage and a data voltage other than the reference voltage are respectively applied to the reference electrode 270 and the pixel electrode 191, an electric field is generated between the reference electrode 270 and the pixel electrode 191. Near each edge of the plurality of openings 71, 72a, 72b, 91, 92a and 92b is generated a fringe field having a component parallel to the reference electrode 270 and the pixel electrode 191. The parallel component of the fringe field is perpendicular to the edge and determines the inclination direction of the nearby liquid crystal molecules.

Referring to Fig. 4, the openings 71, 72a, 72b, 91, 92a and 92b divide the pixel region between the pixel electrode 191 and the reference electrode 270 into a plurality of domains, each of which have a pair of primary edges. The primary edges make an angle of 45 degrees with the gate line 121.

Because the liquid crystal molecules in a domain tend to incline azimuthally perpendicular to the primary edges of the domain when a non-zero voltage is applied to the liquid crystal molecules, there are approximately four directions in which the liquid crystal molecules in the pixel region can incline. With such a multi-domain technology, the viewing angle broadens.

The design of the openings 71, 72a, 72b, 91, 92a and 92b for forming a plurality of domains may vary according to various design factors. At least one of the openings 71, 72a, 72b, 91, 92a and 92b may be replaced with a protrusion (not shown) or a depression (not shown). The protrusion may be made of organic or inorganic material and may be formed over or under the pixel electrode 191 or the reference electrode 270.

The second alignment layer 21 is formed on the reference electrode 270. The second alignment layer 21 is for the initial alignment of the liquid crystal molecules near the reference electrode 270. The second alignment layer 21 may align the liquid crystal molecules near the reference electrode 270 vertically with respect to the reference electrode 270.

**Liquid Crystal Layer**

Referring to Fig. 5, the liquid crystal layer 3 is disposed between first panel 100 and the second panel 200. The liquid crystal molecules have a negative dielectric anisotropy and a positive optical anisotropy. The liquid crystal molecules are aligned almost vertically to the panels 100 and 200 when no voltage is applied. Thus, a normally incident light can pass through the liquid crystal layer 3 with its polarization state unchanged. With the two polarizers 12 and 22 arranged perpendicular, the incident light from the backlight assembly 70 will be blocked when no voltage is applied.

When a non-zero voltage is applied to the liquid crystal layer 3, the liquid crystal molecules tend to incline perpendicular to the electric field generated due to the negative dielectric anisotropy. The extent of the inclination, i.e. the polar angle, depends on the strength of the electric field. The inclined liquid crystal molecules change the polarization state of the incident light. Thus, on leaving the liquid crystal layer 3, the light has a component which may pass through the second polarizer 22.

The thickness of the liquid crystal layer 3 may be determined to give the maximum transmittance when enough voltage is applied to incline the liquid crystal molecules substantially parallel to the panels 100 and 200.

**Polarizers**

Referring to Figs. 1 and 5, a first polarizer 12 and a second polarizer 22 are respectively disposed adjacent to the first panel 100 and the second panel 200.

Referring to Fig. 4, the transmission axes X and Y of the two polarizers 12 and 22 are perpendicular to each other, and make an angle of 45 degrees with the openings 71, 72a, 72b, 91, 92a and 92b of the pixel electrode 191 and the reference electrode 270.

The first polarizer 12 polarizes the light from the backlight assembly 70 and provides a linearly polarized light to the liquid crystal layer 3. The second polarizer 22 plays a role as an analyzer permitting only a parallel component of the light leaving the liquid crystal layer 3 to transmit.

Because any commercial polarizer is not ideal, the transmitted light is not a perfectly polarized light. The polarization efficiency of a polarizer may be defined by:

$$PE = \sqrt{\frac{\overline{T_{parallel}} - \overline{T_{perpendicular}}}{T_{parallel} + T_{perpendicular}}} \times 100(\%) \quad,$$

where $T_{parallel}$ is a transmittance of the two stacked polarizers whose transmission axes are parallel to each other, and $T_{perpendicular}$ is a transmittance of the two stacked polarizers whose transmission axes are perpendicular to each other. Here, $T_{parallel}$ and $T_{perpendicular}$ are dependent on the wavelength of the light, and thus so is the polarization efficiency.

According to one embodiment of the present invention, the polarization efficiency of the first polarizer 12 is higher that that of the second polarizer 22, whereby the brightness can be enhanced without deteriorating the contrast ratio. The polarization efficiency of the first polarizer 12 may exceed 99.985% at 550nm wavelength. The polarization efficiency of the second polarizer 22 may be equal to or less than 99.985% at a wavelength of 550nm.

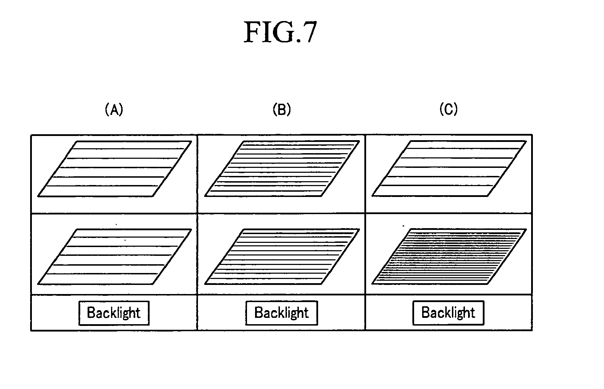

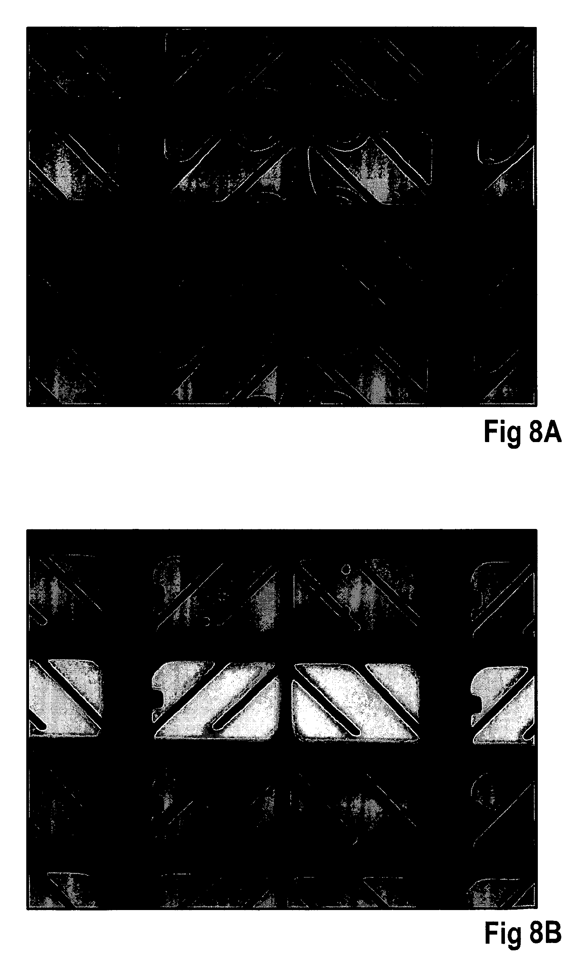

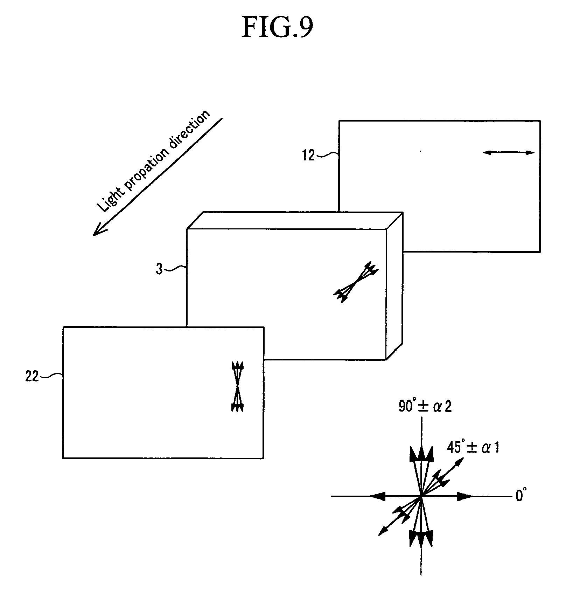

Now, the operation of a pair of polarizers having different polarization efficiencies will be described with the reference of Figs. 7 to 9. Fig. 7 is a schematic diagram illustrating three pairs of polarizers. Fig. 8a is a picture of a conventional liquid crystal display device, illustrating that unnecessary textures appear. Fig. 8b is a picture of a liquid crystal display device in accordance with an embodiment of the present invention, illustrating that unnecessary textures decrease. Fig. 9 is a schematic diagram illustrating polarization change of a light traveling through a liquid crystal display device in accordance with an embodiment of the present invention.

The diagram (A) shows an example of two polarizers having the same polarization efficiency $PE_{low}$. The diagram (B) shows that the two polarizers have the same polarization efficiency $PE_{high}$ which is higher than $PE_{low}$. The diagram (C) shows an example of when the first polarizer has a polarization efficiency $PE_{higher}$ which is higher than $PE_{high}$ and the second polarizer has a polarization efficiency $PE_{lower}$ which is equal to or lower than $PE_{low}$.

In case (A), since the two polarizers have the same low polarization efficiency, the transmitted light includes a non-negligible amount of light whose polarization direction is slightly deviated from the transmission axis of the polarizer. Thus, the maximum transmittance increases. However, the minimum transmittance would not be negligible also when the two polarizers are arranged perpendicular to each other, and thus the contrast ratio decreases.

In case (B), since the two polarizers have the same high polarization efficiency, the transmitted light would be an almost perfectly polarized light. Thus, the maximum transmittance decreases. However, the minimum transmittance would be negligible also when the two polarizers are arranged perpendicular to each other, and thus the contrast ratio increases.

In case (C), let's consider the minimum transmittance first. Since the polarization efficiency of the first polarizer is much higher, the transmitted light would be a more perfectly polarized light. When the two polarizers are arranged perpendicular, the polarization direction of the transmitted light coincides with the absorption direction of the second polarizer. Thus, even if the polarization efficiency of the second polarizer is low, the most transmitted light would be absorbed by the second polarizer. Therefore, the minimum transmittance is as negligible as in case (B).

Next, let's consider the maximum transmittance. With the two polarizers arranged perpendicular - the first polarizer's transmission axis in the x-axis direction, the second polarizer's in the y-axis direction - and enough of a voltage to incline the liquid crystal molecules substantially parallel to the panels applied, the liquid crystal molecules are intended to change the x-polarized light into the y-polarized light. In order to control the change of the polarization state, the azimuthal direction of the liquid crystal molecules should be controlled. According to the embodiment of the present invention described so far, the azimuthal angle is to be 45 degrees with respect to the first polarizer's transmission axis.

However, the liquid crystal molecules in some regions, for example, regions adjacent to the gate line or the date line do not make an angle of 45 degrees with respect to the first polarizer's transmission axis, because a fringe field from a pixel electrode's edge which is parallel to the gate line or the data line hinders the nearby liquid crystal molecules from inclining in the azimuthal direction whose angle is 45 degrees with respect to the first polarizer's transmission axis. Consequently, the x-polarized light passing through such a region through doesn't change into the y-polarized light on leaving the liquid crystal layer, and thus the light cannot pass through the second polarizer even when the voltage is applied. When viewed through a microscope, there are some dark portions, textures, in a pixel as shown in Fig. 8a. Therefore, the maximum transmittance decreases due to the unnecessary textures.

With the first polarizer of a high polarization efficiency and the second polarizer of a low polarization efficiency as in the case (C), although the azimuthal angle of the liquid crystal molecules is deviated from 45 degrees with respect to the first polarizer's transmission axis, the light whose polarization is changed by the liquid crystal molecules can pass through the second polarizer. Consequently, the unnecessary textures decrease as shown in Fig. 8b, and the maximum transmittance increases.

Referring to Fig. 9, the light is linearly polarized in the x-axis direction (0) after passing through the first polarizer 12 having a high polarization efficiency. The liquid crystal molecules in the liquid crystal layer 3 whose azimuthal angle deviates from 45 degrees ($45° \pm \alpha_1$) changes the x-polarized incident light into a light of elliptical polarization or linear polarization whose direction deviates from the y-axis direction ($90° \pm \alpha_2$). However, since the polarization efficiency of the second polarizer 22 is low, the light of the elliptical polarization or linear polarization deviated from y-axis direction ($90° \pm \alpha_2$) can pass through the second polarizer 22. Therefore, the brightness improves without deteriorating the contrast ratio.

Embodiments described above illustrate but do not limit the invention. Numerous modifications and variations are possible within the scope of the present invention.

### Claims

1. A display device comprising:

   a backlight;
   a first polarizer having a first polarization efficiency and a first axis of transmission; and
   a second polarizer having a second polarization efficiency lower than the first polarization efficiency and a second axis of transmission, the first polarizer disposed between the second polarizer and the backlight.

2. The display device of claim 2, wherein the first axis of transmission is substantially perpendicular to the second axis of transmission.

3. The display device of claim 1, further comprising:

   a first substrate between the first polarizer and the second polarizer;
   a second substrate between the first substrate and the second polarizer;
   a gate line, a data line and a pixel electrode on one of the substrates;
   a transistor coupled to the gate line, the data line and the pixel electrode;
   a reference electrode on the other substrate, and
   a liquid crystal layer between the first substrate and the second substrate,

4. The display device of claim 3, wherein the liquid crystal layer has a homeotropic alignment at at least one of the first substrate and the second substrate when no voltage is applied to the liquid crystal layer.

5. The display device of claim 4, wherein at least one of an opening and a protrusion is formed on at least one of the pixel electrode and the reference electrode.

6. The display device of claim 5, wherein a longitudinal direction of the at least one of the opening and the protrusion makes an angle about 45 degrees with the first transmission axis.

**7.** The display device of claim 3, wherein the liquid crystal layer has a homogeneous alignment at at least one of the first substrate and the second substrate when no voltage is applied to the liquid crystal layer.

**8.** The display device of claim 2, wherein the first polarization efficiency exceeds 99.985% at 550nm wavelength.

**9.** The display device of claim 2, wherein the second polarization efficiency is less than or equal to 99.985% at 550nm wavelength.

**10.** The display device of claim 1, further comprising:

a first substrate between the first polarizer and the second polarizer;
a second substrate between the first substrate and the second polarizer;
a gate line, a data line, a pixel electrode and a reference electrode on one of the substrates;
a transistor coupled to the gate line, the data line and the pixel electrode, and
a liquid crystal layer between the first substrate and the second substrate,

**11.** The display device of claim 10, wherein the liquid crystal layer has a homeotropic alignment at at least one of the first substrate and the second substrate when no voltage is applied to the liquid crystal layer.

**12.** The display device of claim 10, wherein the liquid crystal layer has a homogeneous alignment at at least one of the first substrate and the second substrate when no voltage is applied to the liquid crystal layer.

**13.** The display device of claim 12, wherein the pixel electrode and the reference electrode comprise a plurality of first branches and a plurality of second branches, respectively, and the first branches and the second branches are disposed alternately when viewed from a direction normal to the first substrate.

**14.** A display device comprising:

a first polarizer having a first polarization efficiency and a first transmission axis;
a second polarizer having a second polarization efficiency and a second transmission axis, the second polarization efficiency being lower than the first polarization efficiency and the second transmission axis being substantially perpendicular to the first transmission axis;
a first substrate between the first polarizer and the second polarizer;
a second substrate between the first substrate and the second polarizer;
a liquid crystal layer disposed between the first substrate and the second substrate having a negative dielectric anisotropy, and
a backlight assembly providing a light toward the first polarizer.

**15.** The display device of claim 14, further comprising:

a gate line, a data line and a pixel electrode on the first substrate;
a transistor coupled to the gate line, the date line and the pixel electrode and comprising an amorphous silicon or a poly-silicon;
a color filter on the second substrate, and
a reference electrode on the color filter,

wherein a plurality of openings or a plurality of protrusions are formed on one of the pixel electrode and the reference electrode.

**16.** The display device of claim 15, wherein the first polarization efficiency is higher than 99.985% at 550nm wavelength.

**17.** The display device of claim 15, wherein the second polarization efficiency is lower than or equal to 99.985% at 550nm wavelength.

**18.** The display device of claim 14, further comprising:

a gate line formed on the first substrate and having a gate electrode;
an gate insulating layer on the gate electrode;

a semiconductor formed on the gate insulating layer and overlapping the gate electrode;
a data line including a source electrode, the source electrode being formed at least in part on the semiconductor;
a drain electrode formed at least in part on the semiconductor and spaced apart from the source electrode;
a passivation layer covering a gap between the source electrode and the drain electrode;
a color filter on the passivation layer;
a pixel electrode formed on the color filter and electrically connected to the drain electrode, and
a reference electrode on the second substrate,

wherein a plurality of openings or a plurality of protrusions are formed on one of the pixel electrode and the reference electrode.

19. The display device of claim 18, further comprising:

an organic insulating layer between the color filter and the pixel electrode.

20. The display device of claim 14, further comprising:

a color filter formed on the first substrate;
an organic insulating layer on the color filter;
a gate line formed on the organic insulating layer and having a gate electrode;
a gate insulating layer on the gate electrode;
a semiconductor formed on the gate insulating layer and overlapping the gate electrode;
a data line including a source electrode, the source electrode being formed at least in part on the semiconductor;
a drain electrode formed at least in part on the semiconductor and spaced apart from the source electrode;
a passivation layer covering a gap between the source electrode and the drain electrode;
a pixel electrode formed on the color filter and electrically connected to the drain electrode, and
a reference electrode on the second substrate.

21. The display device of claim 20, wherein a plurality of openings or a plurality of protrusions are formed on one of the pixel electrode and the reference electrode.

22. A display device comprising:

a first polarizer having a first polarization efficiency and a first transmission axis;
a second polarizer having a second polarization efficiency and a second transmission axis, the second polarization efficiency being lower than the first polarization efficiency and the second transmission axis being substantially perpendicular to the first transmission axis;
a first substrate between the first polarizer and the second polarizer;
a second substrate between the first substrate and the second polarizer;
a liquid crystal layer disposed between the first substrate and the second substrate having a positive dielectric anisotropy, and
a backlight assembly providing a light toward the first polarizer.

23. The display device of claim 20, further comprising:

a gate line and a reference electrode formed on the first substrate, the gate line having a gate electrode and the reference electrode having a plurality of first branches;
a gate insulating layer covering the gate line and the reference electrode;
a semiconductor formed on the gate insulating layer and overlapping the gate electrode;
a data line including a source electrode, the source electrode being formed at least in part on the semiconductor;
a drain electrode formed at least in part on the semiconductor and spaced apart from the source electrode, and
a pixel electrode electrically connected to the drain electrode and having a plurality of second branches,

wherein the first branches and the second branches are disposed alternately when viewed from a direction normal to the first substrate.

24. The display device of claim 21, wherein at least one of the first branches and at least one of the second branches are parallel to each other and make an acute angle with respect to the gate line.

**25.** The display device of claim 21, wherein the first polarization efficiency is higher than 99.985% at 550nm wavelength.

**26.** The display device of claim 21, wherein the second polarization efficiency is lower than or equal to 99.985% at 550nm wavelength.

# FIG.1

# FIG.2

# FIG.3

# FIG.4

# FIG.5

# FIG.6

# FIG.7

Fig 8A

Fig 8B

# FIG.9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020060117623